# EUROPÄISCHE PATENTSCHRIFT

(11) **EP 0 946 922 B1**
(45) Veröffentlichungstag und Bekanntmachung des Hinweises auf die Patenterteilung: **08.05.2002**
(21) Anmeldenummer: 97954447.5
(22) Anmeldetag: 19.12.1997
(51) Int. Cl.: G06K 7/00

(54) **KARTENLESEVORRICHTUNG**
CARD READING DEVICE
DISPOSITIF DE LECTURE DE CARTES

(30) Priorität: 20.12.1996 DE 19653599
(43) Veröffentlichungstag der Anmeldung: 06.10.1999
(73) Patentinhaber: TYCO Electronics AMP GmbH, 64625 Bensheim (DE); TELEFONAKTIEBOLAGET LM ERICSSON, 126 25 Stockholm (SE)
(72) Erfinder: HOOLHORST, Albert, NL-4527 BE Aardenburg (NL); PERSSON, Per-Hakan, S-244 91 Kävlinge (SE)
(74) Vertreter: Klunker . Schmitt-Nilson . Hirsch
(86) Internationale Anmeldenummer: EP9707203
(87) Internationale Veröffentlichungsnummer: WO9828705

(56) Entgegenhaltungen:
- WO-A-96/30869
- DE-C- 19 523 793
- US-A- 5 259 784

## Beschreibung

Die vorliegende Erfindung betrifft eine Kartenlesevorrichtung.

Kartenlesevorrichtungen sind beispielsweise (aber bei weitem nicht ausschließlich) die in Mobiltelefonen vorgesehenen Lesevorrichtungen zum Entgegennehmen und/oder Weitergeben von durch eine oder für eine Chipkarte oder eine SIM-Karte bereitgestellten Informationen.

Chipkarten und SIM-Karten werden in Mobiltelefonen vor allem zur Teilnehmeridentifizierung eingesetzt; der Aufbau und die Funktion von Chipkarten und SIM-Karten sind allgemein bekannt und bedürfen keiner näheren Erläuterung.

Kartenlesevorrichtungen sind selbstverständlich nicht auf die Verwendung für Chipkarten und SIM-Karten beschränkt, sondern können grundsätzlich auch zum Lesen beliebiger anderer Karten verwendet werden.

Dies gilt unter anderem auch für die sogenannten MM-Karten, an welchen gerade gearbeitet wird und welche schon in naher Zukunft als Speichermedien, genauer gesagt als Massenspeicher in Halbleitertechnologie in den unterschiedlichsten elektronischen Geräten Einzug finden werden. "MM" ist die Abkürzung für "multi media" und damit Ausdruck der vielfältigen Einsatzmöglichkeiten von MM-Karten. MM-Karten weisen demnächst eine Speicherkapazität von 64 MBit auf. Es werden aber bereits jetzt Speicherkapazitäten bis in den GBit-Bereich als realistisch angesehen.

Aufgrund der geringen Größe der MM-Karten (bei den meisten MM-Karten liegt die Größe derzeit zwischen der von SIM-Karten und der von Chipkarten) und ferner aufgrund der Tatsache, daß die Lesevorrichtungen für derartige Karten ebenfalls sehr klein sein können (es müssen keine Motoren, bewegbaren Leseköpfe oder dergleichen vorgesehen werden), kommt der Einsatz derartiger MM-Karten auch für Mobiltelefone in Frage. In Mobiltelefonen können die MM-Karten beispielsweise zur Speicherung von Telefonbüchern, Sprache (Anrufbeantworterfunktion), Fax-Nachrichten, Software und dergleichen eingesetzt werden.

Allerdings steht in Mobiltelefonen und auch in vielen anderen Geräten, in welchem MM-Karten zum Einsatz kommen können, nur ein sehr beschränkter Platz für den Einbau von zusätzlichen Kartenlesevorrichtungen zur Verfügung. Erschwerend kommt hinzu, daß die zu lesenden Karten schnell und einfach wechselbar sein müssen und daß die Kartenlesevorrichtung vorzugsweise zur gleichzeitigen Aufnahme mehrerer Karten ausgelegt ist.

Der vorliegenden Erfindung liegt daher die Aufgabe zugrunde, eine zum gleichzeitigen Lesen mehrerer Karten geeignete Kartenlesevorrichtung zu finden, deren Größe minimal gehalten werden kann.

Diese Aufgabe wird erfindungsgemäß durch das im kennzeichnenden Teil des Patentanspruchs 1 beanspruchte Merkmal gelöst.

Demnach ist vorgesehen, daß die Kartenlesevorrichtung zum Lesen von seitlich versetzt übereinander liegenden Karten ausgebildet ist.

Eine derartige Auslegung der Kartenlesevorrichtung erlaubt eine besonders einfache, elegante und platzsparende Kontaktierung der mehreren Karten. Die zur Kontaktierung der mehreren Karten vorzusehenden mehreren Kontaktelementegruppen der Kartenlesevorrichtung können dann nämlich beispielsweise auf einem treppenartig ausgebildeten Kontaktelementeabschnitt der Kartenlesevorrichtung angeordnet werden, was sich in mehrfacher Hinsicht als vorteilhaft erweist, denn
1) ermöglicht dies einen denkbar einfachen mechanischen Aufbau der Kartenlesevorrichtung, und
2) können die Kontaktelemente der Kartenlesevorrichtung aufgrund der örtlichen Konzentration sehr einfach miteinander verbunden (parallel geschaltet) bzw. zu Kontaktstellen verschiedener Karten kontaktierenden Mehrfach-Kontaktelementen zusammengefaßt werden.

Der einfache mechanische Aufbau der Kartenlesevorrichtung, die einfache Verbindbarkeit und/oder Zusammenfaßbarkeit der Kontaktelemente derselben sowie die unmittelbare (zwischenraumfreie) Übereinanderstapelbarkeit der zu lesenden Karten ermöglicht eine optimale Ausnutzung des zur Verfügung stehenden Raums bzw. - anders ausgedrückt - den Aufbau von Kartenlesevorrichtungen, die nur unwesentlich größer sind als die zu lesenden Karten selbst.

Es wurde also eine Kartenlesevorrichtung gefunden, deren Größe minimal ist.

Aus DE-A-19523793 ist eine Gruppe von seitlich versetzt übereinander liegenden Speicherkarten bekannt: s. Fig. 7, 8 und 11. Es ist in DE-A-19523793 vorgesehen, daß diese Gruppe von Karten an einen Systembus angeschlossen wird (s. Spalte 1, Zeile 3-14), wodurch selbstverständlich der Inhalt der Karten gelesen werden kann. In DE-A-19523793 ist aber keine Kartenlesevorrichtung beschrieben.

US-A-5259784 beschreibt eine Struktur, in der PCB ("printed circuit board") Karten (23) in seitlich versetzt übereinander liegender Weise montierbar sind (s. Fig. 2). US-A-5259784 zeigt aber nicht welche Schaltungen diese PCB Karten enthalten. In US-A-5259784 ist auch keine Kartenlesevorrichtung beschrieben.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert. Es zeigen
- Figur 1A: eine Draufsicht auf eine MM-Karte,
- Figur 1B: eine Seitenansicht der MM-Karte,
- Figur 2A: einen Querschnitt durch eine Kartenlesevorrichtung bei vollständig und teilweise geöffnetem Deckel,
- Figur 2B: einen Querschnitt durch die Kartenlesevorrichtung bei bis zu einer ersten Schließstellung geschlossenem Deckel,
- Figur 3A: eine Seitenansicht der Kartenlesevorrichtung bei bis zu einer zweiten Schließstellung geschlossenem Deckel,
- Figur 3B: eine Seitenansicht der Kartenlesevorrichtung bei bis zu einer dritten Schließstellung geschlossenem Deckel,
- Figur 4: eine Draufsicht auf ein Kontakt- und Kartenträgerteil der Kartenlesevorrichtung gemäß den Figuren 2 und 3,
- Figur 5: eine Draufsicht auf den Deckel der Kartenlesevorrichtung gemäß den Figuren 2 und 3,
- Figur 6: eine perspektivische Ansicht eines Mehrfach-Kontaktelements der Kartenlesevorrichtung,
- Figur 7: eine perspektivische Ansicht eines Führungs- und Verriegelungsarms des Kontakt- und Kartenträgerteils, und
- Figur 8: eine perspektivische Ansicht eines Verriegelungsarms des Deckels.

Die im folgenden beschriebene Kartenlesevorrichtung ist eine zum Lesen von MM-Karten ausgelegte Kartenlesevorrichtung. Dies bedeutet jedoch nicht, daß die Erfindung auf hierfür ausgelegte Kartenlesevorrichtungen beschränkt ist; die Erfindung ist grundsätzlich auch zum Lesen beliebiger anderer Karten (beispielsweise "normaler" Chipkarten, SIM-Karten und dergleichen) verwendbar, wobei die Karten nicht nur eine beliebige Funktion, sondern auch beliebige Abmessungen haben können.

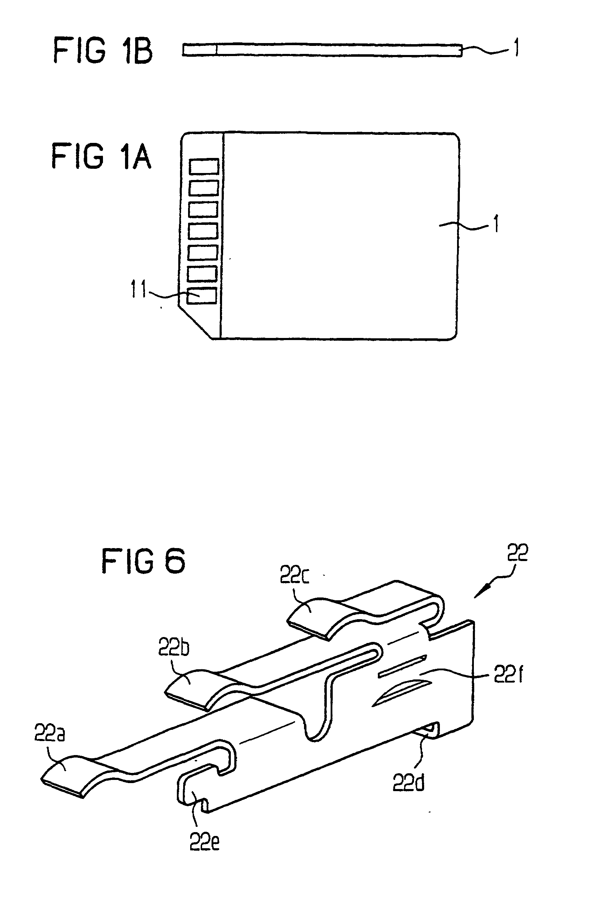

Eine MM-Karte, zu deren Lesen die nachfolgend näher beschriebene Kartenlesevorrichtung geeignet ist, ist in der Figur 1A in der Draufsicht und in der Figur 1B in einer Seitenansicht gezeigt. Wie aus den genannten Figuren ersichtlich ist, weist die dort dargestellte MM-Karte 1 an ihrer Oberfläche in Randnähe Kontaktflächen in Form einer Reihe von Oberflächenkontakten 11 auf. Diese Oberflächenkontakte 11 der MM-Karte 1 müssen durch die Kartenlesevorrichtung, genauer gesagt Kontaktelemente derselben kontaktiert werden.

Die im vorliegenden Ausführungsbeispiel betrachtete MM-Karte 1 weist eine Länge von 32 mm, eine Breite von 24 mm und eine Dicke zwischen 1,3 und 1,4 mm auf.

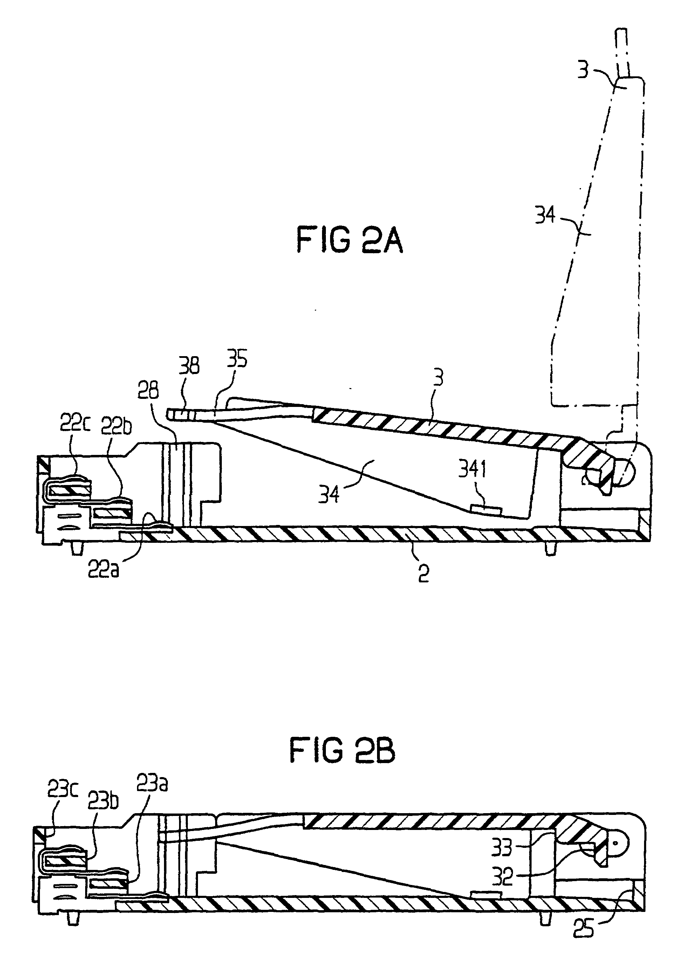

Die vorliegend betrachtete Kartenlesevorrichtung ist, wie nachfolgend unter Bezugnahme auf die Figuren 2 bis 8 noch im einzelnen beschrieben werden wird, eine von oben her bedienbare Kartenlesevorrichtung.

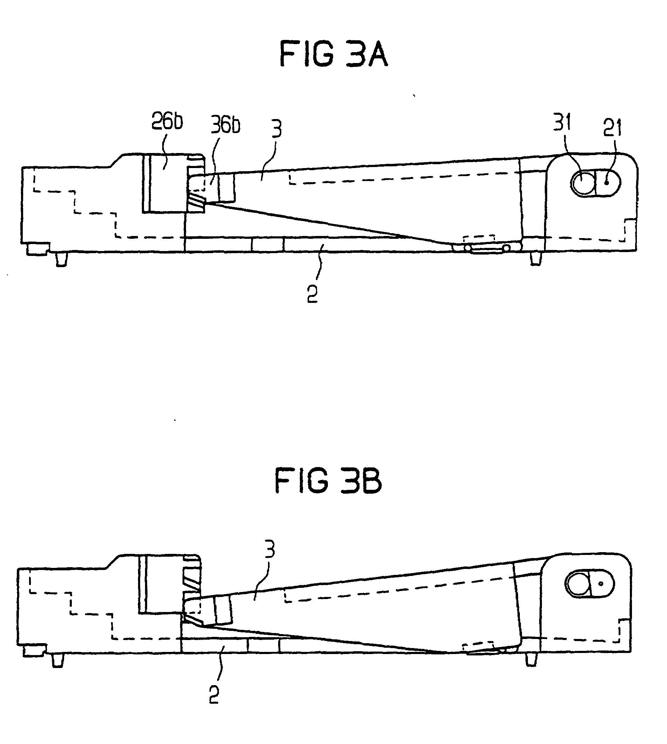

Wie insbesondere aus den Figuren 2 und 3 ersichtlich ist, besteht die betrachtete Kartenlesevorrichtung aus einem Kontakt- und Kartenträgerteil 2 und einem an diesem schwenkbar angebrachten Deckel 3.

Das Kontakt- und Kartenträgerteil 2 enthält, wie die Bezeichnung schon andeutet, die vorstehend bereits erwähnten Kontaktelemente und dient zur Aufnahme und Kontaktierung mehrerer, im vorliegend betrachteten Ausführungsbeispiel bis zu drei MM-Karten 1.

Der Deckel 3 dient insbesondere zum Halten der MM-Karten in deren bestimmungsgemäßer (Lese-) Position.

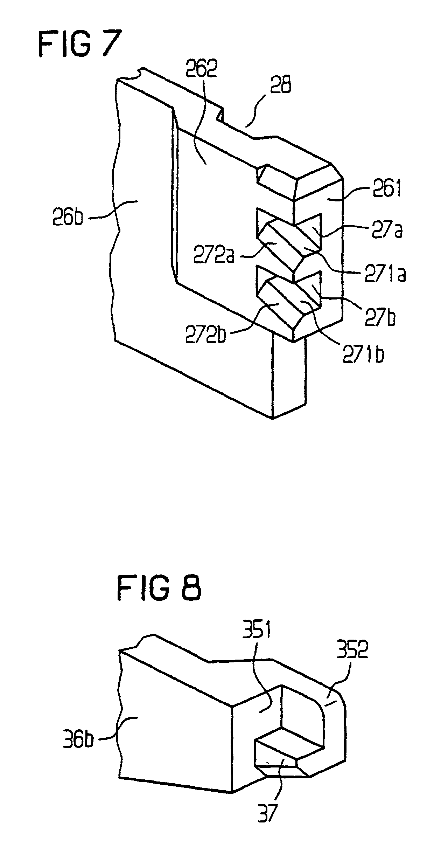

Der Deckel 3 weist wie insbesondere aus der in der Figur 5 dargestellten Deckel-Draufsicht und der in der Figur 3 gezeigten Seitenansicht der Kartenlesevorrichtung ersichtlich ist, Zapfen 31 auf, die im mit dem Kontakt- und Kartenträgerteil 2 verbundenen Zustand des Deckels 3 in Langlöchern 21 des Kontakt- und Kartenträgerteils 2 zu liegen kommen; durch ein Schwenken um diese Zapfen 31 kann der Deckel 3 auf- und zugeklappt werden.

Die vollständig geöffnete Stellung des Deckels und eine nur teilweise geöffnete Stellung des Deckels sind in der Figur 2A dargestellt; der in der vollständig hochgeklappten Stellung befindliche Deckel ist dabei durch gestrichelte Linien dargestellt. Bei vollständig geöffnetem Deckel kann die Kartenlesevorrichtung von oben her mit bis zu drei MM-Karten bestückt werden.

Der Deckel 3 kann mit dem Kontakt- und Kartenträgerteil 2 in mehreren Positionen verrasten. Die Rastposition, die der Deckel bestimmungsgemäß einnimmt, wenn das Kontakt- und Kartenträgerteil mit drei Karten bestückt ist, ist in der Figur 2B gezeigt, die Rastposition, die der Deckel bestimmungsgemäß einnimmt, wenn das Kontakt- und Kartenträgerteil mit zwei Karten bestückt ist, ist in der Figur 3A gezeigt, und die Rastposition, die der Deckel bestimmungsgemäß einnimmt, wenn das Kontakt- und Kartenträgerteil mit nur einer Karte bestückt ist, ist in der Figur 3B gezeigt. Die Art und Weise der Verrastung bzw. der Verriegelung zwischen dem Kontakt- und Kartenträgerteil und dem Deckel wird später noch genauer beschrieben.

Das Kontakt- und Kartenträgerteil 2 enthält, wie vorstehend bereits erwähnt wurde, die Kontaktelemente zum Kontaktieren der Oberflächenkontakte 11 der MM-Karte 1. Diese Kontaktelemente sind in den Figuren mit den Bezugszeichen 22a, 22b und 22c bezeichnet.

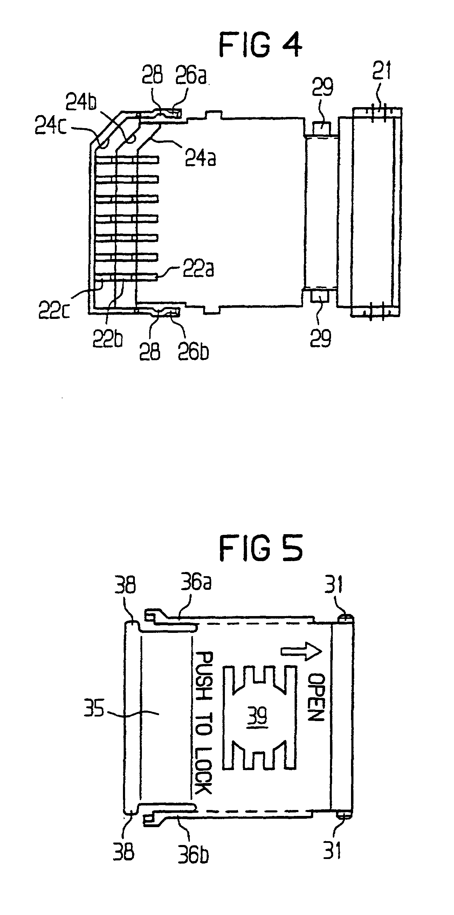

Wie insbesondere aus der in der Figur 4 gezeigten Draufsicht auf das Kontakt- und Kartenträgerteil 2 ersichtlich ist, sind drei nebeneinander liegende Reihen von Kontaktelementen vorgesehen, wobei die durch mehrere Kontaktelemente 22a gebildete erste (gemäß der Darstellung in den Figuren rechte) Kontaktelementereihe zum Kontaktieren einer ersten MM-Karte, die durch mehrere Kontaktelemente 22b gebildete zweite (gemäß der Darstellung in den Figuren mittlere) Kontaktelementereihe zum Kontaktieren einer zweiten MM-Karte, und die durch mehrere Kontaktelemente 22c gebildete dritte (gemäß der Darstellung in den Figuren linke) Kontaktelementereihe zum Kontaktieren einer dritten MM-Karte ausgelegt sind.

Die Kontaktelementereihen sind, wie insbesondere aus der Figur 2 ersichtlich ist, in einem treppenartig ausgebildeten Kontaktelementeabschnitt des Kontakt- und Kartenträgerteils 2 auf verschiedenen Höhenniveaus angeordnet. Dabei liegt die erste (rechte) Kontaktelementereihe auf dem untersten Höhenniveau, die zweite (mittlere) Kontaktelementereihe auf dem mittleren Höhenniveau, und die dritte (linke) Kontaktelementereihe auf dem obersten Höhenniveau. Die jeweiligen Höhenniveau-Unterschiede (Stufenhöhen) entsprechen in etwa der Dicke einer MM-Karte. Der Abstand zwischen benachbarten Kontaktelementereihen (Stufentiefe) entspricht in etwa dem Ausmaß, in dem zwei übereinander angeordnete MM-Karten seitlich zu versetzen sind, damit ihre Oberflächenkontakte 11 frei zugänglich (die Oberflächenkontakte einer MM-Karte nicht durch eine darüber oder darunter angeordnete MM-Karte verdeckt) sind. Der Versatz ist im betrachteten Beispiel relativ gering, weil die Oberflächenkontakte 11 der betrachteten MM-Karte in Randnähe derselben angeordnet sind.

Die Kontaktelementereihen sind örtlich und funktional getrennte, zur gleichzeitigen Kontaktierung mehrerer MM-Karten geeignete Kontaktelementegruppen.

Die örtliche Konzentration der Kontaktelemente für alle zu lesenden Karten in dem relativ klein bemessenen Kontaktelementeabschnitt ermöglicht eine besonders einfache Verbindung derselben sowohl untereinander als auch mit Anschlußelementen zur Verbindung mit einer externen Schaltung.

Für den Fall, daß die einander entsprechenden Kontaktelemente der jeweiligen Kontaktelementereihen parallel zu schalten sind, kann vorgesehen werden, die parallel zu schaltenden Kontaktelemente zumindest teilweise zu Mehrfach-Kontaktelementen zusammenzufassen.

Ein derartiges Mehrfach-Kontaktelement 22 ist in der Figur 6 dargestellt. Durch das gezeigte Mehrfach-Kontaktelement werden gleichzeitig drei Kontaktelemente, nämlich ein Kontaktelement 22a der ersten (untersten) Kontaktelementereihe, ein Kontaktelement 22b der zweiten (mittleren) Kontaktelementereihe, und ein Kontaktelement 22c der dritten (obersten) Kontaktelementereihe zusammengefaßt. Allgemein gesprochen sind durch ein wie gezeigt ausgebildetes Mehrfach-Kontaktelement 22 insbesondere die einander entsprechenden (gemäß der Darstellung in der Figur 4 nebeneinander angeordneten) Kontaktelemente einzelner oder aller Kontaktelementereihen zu einem einzigen Mehrfach-Kontaktelement zusammenfaßbar.

Das in der Figur 6 gezeigte Mehrfach-Kontaktelement 22 wird vorzugsweise aus einem Blech ausgestanzt und dann entsprechend zurechtgebogen. Die Form des ausgestanzten Bleichteils und das Biegen desselben können anhand der Darstellung in der Figur 6 nachvollzogen werden und bedürfen keiner näheren Beschreibung. Bemerkenswert ist jedoch die Herstellung des zweiten Kontaktelements 22b und des dritten Kontaktelements 22c: diese werden zunächst als eine zusammenhängende Einheit um 90° in eine erste Biegerichtung (gemäß der Darstellung in der Figur 6 nach hinten) gebogen, und anschließend wird das dritte Kontaktelement 22c allein um 180° in eine zur ersten Biegerichtung senkrechte zweite Biegerichtung (gemäß der Darstellung in der Figur 6 nach links) gebogen, wodurch es wie gezeigt seitlich versetzt über dem zweiten Kontaktelement 22b zu liegen kommt. Durch eine derartige Herstellung der zweiten und dritten Kontaktelemente 22b und 22c läßt sich die Größe des insbesondere durch die Zusammenfassung mehrerer Kontaktelemente von Haus aus schon sehr klein ausbildbaren Mehrfach-Kontaktelements nochmals verringern bzw. die Herstellung desselben problemlos beherrschen; gleichzeitig sinkt aufgrund der dadurch minimal haltbaren Größe der Blechstanzteile der Materialverbrauch.

Das Mehrfach-Kontaktelement 22 weist neben den Kontaktelementen 22a, 22b und 22c einen zu einer Lötfahne 22d gebogenen Fortsatz, einen als Zentrierelement 22e verwendbaren Fortsatz und eine Prägung 22f auf.

Die Lötfahne 22d dient zum Anlöten an entsprechende Verbindungsstellen einer in den Figuren nicht gezeigten Leiterplatte oder dergleichen, wodurch mittelbar auch die Kartenlesevorrichtung an der Leiterplatte befestigt wird (zur zusätzlichen Befestigung der Kartenlesevorrichtung auf der Leiterplatte sind im betrachteten Beispiel an der Unterseite des Kontakt- und Kartenträgerteils 2 weitere Lötfahnen 29 vorgesehen). Die Integration der Lötfahne 22d in das Mehrfach-Kontaktelement 22 macht separate Verbindungen zwischen Lötfahnen und Kontaktelementen überflüssig und trägt darüber hinaus zu einer Reduzierung der Anzahl der Einzelteile bei, die zum Aufbau einer Kartenlesevorrichtung zusammenzusetzen sind.

Das Zentrierelement 22e und die Prägung 22f dienen der bestimmungsgemäßen Montage und Befestigung der Mehrfach-Kontaktelemente 22 im Kontakt- und Kartenträgerteil 2.

Es dürfte sich von selbst verstehen, daß der vorstehend beschriebene Kontaktelementeabschnitt in vielfacher Hinsicht abwandelbar ist. So ist es beispielsweise nicht zwingend erforderlich, daß die Kontaktelemente wie beschrieben reihenweise nebeneinander angeordnet sind; die gewählte Kontaktelementeanordnung kann bzw. muß selbstverständlich vor allem an die Anordnung der zu kontaktierenden Kontaktstellen auf den jeweils zu lesenden Karten und/oder an sonstige vorgegebene Umstände und Bedingungen angepaßt werden. Der Kontaktelementeabschnitt kann für den Fall, daß es kontaktlose Karten zu kontaktieren gilt, zusätzlich oder alternativ zu den beschriebenen Kontaktelementen mit entsprechenden Antennen ausgestattet sein. Der Kontaktelementeabschnitt muß auch nicht unbedingt im Kontakt- und Kartenträgerteil untergebracht sein; es kann statt dessen ganz oder teilweise im Deckel integriert sein.

Der wie beschrieben oder ähnlich ausgebildete Kontaktelementeabschnitt ermöglicht es, mit mehreren MM-Karten, die seitlich versetzt (vorzugsweise ohne Zwischenraum) übereinandergestapelt sind, bestimmungsgemäß in Kontakt zu kommen.

Diese MM-Karten 1 können bei entsprechend weit geöffnetem Deckel 3 der Kartenlesevorrichtung einfach von oben her eingelegt (mit entsprechendem seitlichen Versatz aufeinander gelegt) werden.

Im bestimmungsgemäß eingelegten Zustand der MM-Karten 1 kommen die Oberflächenkontakte 11 einer ersten (untersten) der MM-Karten auf den Kontaktelementen 22a der ersten (untersten) Kontaktelementreihe, die Oberflächenkontakte 11 einer zweiten (mittleren) der MM-Karten auf den Kontaktelementen 22b der zweiten (mittleren) Kontaktelementreihe, und die Oberflächenkontakte 11 einer dritten (obersten) der MM-Karten auf den Kontaktelementen 22c der dritten (obersten) Kontaktelementreihe zu liegen.

Zur ordnungsgemäßen Kontaktierung der Oberflächenkontakte 11 der MM-Karten durch die zugeordneten Kontaktelemente 22a, 22b und 22c bedarf es der Einnahem einer genau vorbestimmten und unveränderbaren Lage der zu lesenden MM-Karten innerhalb des Kontakt- und Kartenträgerteils 2 und eines geeigneten Andrückens der Oberflächenkontakte 11 der MM-Karten 1 gegen die Kontaktelemente 22a, 22b und 22c.

Damit die zu lesenden MM-Karten 1 die geforderte genaue Lage einnehmen und beibehalten, sind im Kontakt- und Kartenträgerteil 2 und im Deckel entsprechende Rahmen- und Anschlagkonstruktionen gebildet. Dabei wird die bestimmungsgemäße Position der ersten (untersten) MM-Karte unter anderem durch eine erste Stirnfläche 23a des Kontaktelementeabschnitts, eine sich daran anschließende erste Schräge 24a und eine gegenüberliegende hintere Anschlagfläche 25 des Kontakt- und Kartenträgerteils 2, die bestimmungsgemäße Position der zweiten (mittleren) MM-Karte unter anderem durch eine zweite Stirnfläche 23b des Kontaktelementeabschnitts, eine sich daran anschließende zweite Schräge 24b und eine im geschlossenen Zustand des Deckels 3 gegenüberliegende erste Anschlagfläche 32 desselben, und die bestimmungsgemäße Position der dritten (obersten) MM-Karte unter anderem durch eine dritte Stirnfläche 23c des Kontaktelementeabschnitts, eine sich daran anschließende dritte Schräge 23c und eine im geschlossenen Zustand des Deckels 3 gegenüberliegende zweite Anschlagfläche 33 desselben definiert. Ein zusätzlicher seitlicher Halt der im Kontakt- und Kartencrägerteil 2 befindlichen MM-Karten wird insbesondere durch einander gegenüberliegende seitliche, im geschlossenen Zustand des Deckels 3 nach unten ragende Schürzen 34 desselben bewirkt.

Um die im Kontakt- und Kartenträgerteil 2 befindlichen MM-Karten 1, genauer gesagt deren Oberflächenkontakte 11 auf die Kontaktelemente 22a, 22b, und 22c drücken zu können, ist der Deckel 3 in seinem freien (vorderen) Endabschnitt 35 um einige Grad nach unten abgewinkelt und elastisch federnd ausgebildet. Dieser Endabschnitt 35 drückt im geschlossenen Zustand des Deckels auf die im Kontakt- und Kartenträgerteil 2 befindliche(n) MM-Karte(n).

Um die die MM-Karte(n) niederdrückende Kraft unabhängig von der Anzahl der im Kontakt- und Kartenträgerteil 2 befindlichen MM-Karten machen zu können, können der Deckel 3 und das Kontakt- und Kartenträgerteil 2 in unterschiedlichen Relativlagen miteinander verrasten. Die Rastelemente des Kontakt- und Kartenträgerteils 2 sind an elastisch federnd ausgebildeten Führungs- und Verriegelungsarmen 26a und 26b vorgesehen, welche im betrachteten Beispiel wie in den Figuren gezeigt an gegenüberliegenden Seiten des Kontakt- und Kartenträgerteils 2 parallel verlaufen; die Rastelemente des Deckels 3 sind an ebenfalls elastisch federnd ausgebildeten Verriegelungsarmen 36a und 36b vorgesehen, welche im betrachteten Beispiel an gegenüberliegenden Seiten des Deckels 2 parallel mit Abstand zu dessen freiem Endabschnitt 35 verlaufen.

Die Rastelemente des Kontakt- und Kartenträgerteils 2 sind in der Figur 7 gezeigt. Es handelt sich um in den freien Endabschnitten der Führungs- und Verriegelungsarme 26a und 26b übereinander angeordnete Rastvertiefungen 27a und 27b, welche sich ausgehend von der Stirnseite 261 der Führungs- und Verriegelungsarme 26a und 26b ein Stück entlang der voneinander abgewandten Außenseiten 262 derselben erstrecken, und deren untere Begrenzungsflächen 271a und 271b mit Abschrägungen 272a und 272b versehen und zur Stirnseite hin abfallend ausgebildet sind.

Die Rastelemente des Deckels 3 sind in der Figur 8 gezeigt. Es handelt sich um an den freien Endabschnitten der Verriegelungsarme 36a und 36b vorgesehene, der Form der Rastvertiefungen 27a und 27b angepaßte Rastnasen 37 (eine Rastnase pro Verriegelungsarm), welche aus der Stirnseite 351 der Verriegelungsarme 35a und 35b hervorstehen und jeweils durch ein Versteifungselement 352 verstärkt werden.

Das Kontakt- und Kartenträgerteil 2 und der Deckel 3 weisen darüber hinaus Führungselemente auf, welche beim Schließen des Deckels noch vor dem Verrasten desselben mit dem Kontakt - und Kartenträgerteil 2 in Eingriff kommen. Die Führungselemente des Kontakt- und Kartenträgerteils 2 bestehen aus an den einander zugewandten Seiten der Führungs- und Verriegelungsarme 26a und 26b vorgesehenen, vertikal verlaufenden Führungsnuten 28 mit flach abfallenden Flanken; die Führungselemente des Deckels 3 bestehen aus an den voneinander abgewandten Seiten des freien Endabschnitts 35 vorgesehenen Führungszapfen 38.

Beim Schließen des Deckels 3 gelangen zunächst die am freien Endabschnitt 35 vorgesehenen Führungszapfen 38 in die Führungsnuten 28 des Kontakt- und Kartenträgerteils 2 und werden während des weiteren Schließvorgangs und im geschlossenen Zustand darin geführt und gehalten. Dann erreichen die Rastnasen 37 der Verriegelungsarme 36a und 36b des Deckels 3 die Führungs- und Verriegelungsarme 26a und 26b des Kontakt- und Kartenträgerteils 2. Die Rastnasen gleiten unter Auseinanderspreizen der Verriegelungsarme 36a und 36b des Deckels 3 und/oder unter Zusammendrücken der Führungs- und Verriegelungsarme 26a und 26b des Kontakt- und Kartenträgerteils 2 an deren Außenseiten entlang, bis sie schließlich in die obere Rastvertiefungen 27a einschnappen. In diesem Zustand hat der Deckel die Stellung erreicht, die er für den Fall, daß drei MM-Karten im Kontakt- und Kartenträgerteil 2 eingelegt sind, einnehmen muß; der Deckel 3 schlägt beim Versuch eines weiteren Niederdrückens des Deckels am Kartenstapel an. Der freie, elastisch federnd ausgebildete Endabschnitt 35 des Deckels 3 übt eine Druckkraft auf den Kartenstapel aus und sorgt damit für ein geeignetes Andrücken der jeweiligen MM-Karten gegen die zugeordneten Kontaktelemente.

Befinden sich nur zwei MM-Karten im Kontakt- und Kartenträgerteil 2, so kann der Deckel bis zu den nächsten Rastvertiefungen 27b niedergedrückt werden. Dabei verlassen die Rastnasen 37 die oberen Rastvertiefungen 27a, was aufgrund der an den Rastvertiefungen 27a und 27b und den Rastnasen 37 vorgesehenen Neigungen und Abschrägungen keinen nennenswerten Kraftaufwand erfordert, und gleiten wieder unter Auseinanderspreizen der Verriegelungsarme 36a und 36b des Deckels 3 und/oder unter Zusammendrücken der Führungs- und Verriegelungsarme 26a und 26b des Kontakt- und Kartenträgerteils 2 an dessen Außenseite entlang. Sie erreichen schließlich die unteren Rastvertiefungen 27b und schnappen in diese ein. In diesem Zustand hat der Deckel die Stellung erreicht, die er für den Fall, daß zwei MM-Karten im Kontakt- und Kartenträgerteil 2 eingelegt sind, einnehmen muß; der Deckel 3 schlägt beim Versuch eines weiteren Niederdrückens desselben am Kartenstapel an. Der freie, elastisch federnd ausgebildete Endabschnitt 35 des Deckels 3 übt auch hier eine Druckkraft auf den Kartenstapel aus und sorgt damit für ein geeignetes Andrücken der jeweiligen MM-Karten gegen die zugeordneten Kontaktelemente.

Befindet sich nur eine MM-Karte 1 im Kontakt- und Kartenträgerteil 2, so kann der Deckel 3 noch weiter niedergedrückt werden. Dabei verlassen die Rastnasen 37 die unteren Rastvertiefungen 27b, was aufgrund der an diesen und den Rastnasen vorgesehenen Neigungen und Abschrägungen keinen nennenswerten Kraftaufwand erfordert, und gleiten wieder unter Auseinanderspreizen der Verriegelungsarme 36a und 36b des Deckels 3 und/oder unter Zusammendrücken der Führungs- und Verriegelungsarme 26a und 26b des Kontakt- und Kartenträgerteils 2 an dessen Außenseite entlang. Sie schnappen schließlich unter einer an der Stirnseite 261 der Führungs- und Verriegelungsarme 26a vorgesehenen Stufe 263 ein. In diesem Zustand hat der Deckel die Stellung erreicht, die er für den Fall, daß nur eine MM-Karte im Kontakt- und Kartenträgerteil 2 eingelegt ist, einnehmen muß; der Deckel 3 schlägt bei Versuch eines weiteren Niederdrückens des Deckels an der eingelegten MM-Karte an. Der freie, elastisch federnd ausgebildete Endabschnitt 35 des Deckels 3 übt auch hier eine Druckkraft auf die MM-Karte aus und sorgt damit für ein geeignetes Andrücken derselben gegen die zugeordneten Kontaktelemente.

Diese, zuletzt beschriebene Stellung des Deckels 3 kann dieser auch nicht verlassen, wenn sich keine Karte in der Kartenlesevorrichtung befindet; dafür sorgt ein bei weiterem Niederdrücken des Deckels erfolgendes Anschlagen der Schürzen 34 des Deckels 3 am Boden des Kontakt- und Kartenträgerteils 2.

Das Schließen des Deckels 3 kann alternativ auch entgegengesetzt zum nachfolgend beschriebenen Öffnen des Deckels erfolgen.

Zum Lösen der Rastverbindung zwischen dem Deckel 3 und dem Kontakt- und Kartenträgerteil 2 muß der Deckel 3 horizontal in Richtung seiner Zapfen 31 geschoben werden. Um den Deckel 3 verschieben zu können, ist seine Oberseite mit einer zum Kraftansatz geeigneten Oberflächenstruktur 29 wie beispielsweise einer Mulde und/oder quer zur Schieberichtung verlaufenden Rippen versehen. Der Deckel läßt sich verschieben, weil dessen Zapfen 31 in Langlöchern 21 des Kontakt- und Kartenträgerteils 2 gelagert sind. Beim Zurückschieben des Deckels 3 passieren zweierlei Dinge. Einerseits gelangen die Führungszapfen 38 des Deckels 3 aus den Führungsnuten 28 des Kontakt- und Kartenträgerteils 2, und andererseits werden die Rastnasen 37 des Deckels 3 aus den Rastvertiefungen 27a oder 27b oder den Stufen 263 der Führungs- und Verriegelungsarme 26a und 26b des Kontakt- und Kartenträgerteils 2 herausgezogen. Ein ausreichend weites Verschieben des Deckels 3 hat schließlich ein Lösen der ursprünglich zwischen dem Kontakt- und Kartenträgerteil 2 und dem Deckel 3 bestehenden Rastverbindung zur Folge, wodurch der Deckel 3 im wesentlichen ungehindert nach oben geklappt werden kann.

Bei Aufklappen der Deckels 3 werden die in der Kartenlesevorrichtung befindlichen Karten mit diesem nach oben genommen. Die Schürzen 34 des Deckels 3 klemmen die Karten nämlich zwischen sich ein und/oder weisen an ihrem unteren Ende einen nach innen ragenden Vorsprung 341 auf, welcher die unterste Karte des in der Kartenlesevorrichtung befindlichen Kartenstapels hintergreift und mithin zusammen mit den gegebenenfalls darüber angeordneten Karten beim Aufklappen des Deckels 3 mitnimmt.

Obgleich die beschriebene Kartenlesevorrichtung kaum größer ist als die zu lesenden Karten selbst, ist sie denkbar einfach herzustellen und verblüffend einfach und elegant zu bedienen.

## Patentansprüche

1. Kartenlesevorrichtung,
**dadurch gekennzeichnet,**
**daß** diese zum Lesen von seitlich versetzt übereinander liegenden Karten (1) ausgelegt ist, und daß diese Kartenlesevorrichtung einen klappbaren Deckel (3) aufweist, der im geöffneten Zustand ein Einlegen der zu lesenden Karten in die Kartenlesevorrichtung gestattet, und der im geschlossenen Zustand die in der Kartenlesevorrichtung befindlichen Karten in deren bestimmungsgemäßer Position hält.

2. Kartenlesevorrichtung nach Anspruch 1,
**dadurch gekennzeichnet,**
**daß** die Kartenlesevorrichtung eine Vielzahl von zur gleichzeitigen Kontaktierung der übereinander liegenden Karten (1) vorgesehenen Kontaktelementen (22a, 22b, 22c) aufweist, welche in einem treppenartig ausgebildeten Kontaktelementeabschnitt konzentriert sind.

3. Kartenlesevorrichtung nach Anspruch 2,
**dadurch gekennzeichnet,**
**daß** pro Karte eine zusammengehörende Gruppe von Kontaktelementen (22a, 22b, 22c) vorgesehen ist, und daß die Kontaktelemente-Gruppen in unterschiedlichen Höhen und seitlich versetzt angeordnet sind.

4. Kartenlesevorrichtung nach Anspruch 3,
**dadurch gekennzeichnet,**
**daß** die Höhendifferenz zwischen benachbarten Kontaktelemente-Gruppen der Dicke einer Karte (1) entspricht.

5. Kartenlesevorrichtung nach Anspruch 3 oder 4,
**dadurch gekennzeichnet,**
**daß** der seitliche Versatz der benachbarten Kontaktelemente-Gruppe dem seitlichen Versatz entspricht, in dem die zu lesenden Karten (1) anzuordnen sind.

6. Kartenlesevorrichtung nach einem der Ansprüche 2 bis 5,
**dadurch gekennzeichnet,**
**daß** elektrisch miteinander zu verbindende Kontaktelemente (22a, 22b, 22c) zu einem Mehrfach-Kontaktelement (22) zusammengefaßt sind.

7. Kartenlesevorrichtung nach einem der Ansprüche 2 bis 6,
**dadurch gekennzeichnet,**
**daß** der Klappbare Deckel (3) im geschlossenen Zustand die in der Kartenlesevorrichtung befindlichen Karten durch ein elastisch federnd ausgebildetes Andruckelement (35) niederdrückt.

8. Kartenlesevorrichtung nach Anspruch 7,
**dadurch gekennzeichnet,**
**daß** der Deckel (3) mit einem Kontakt- und Kartenträgerteil (2) der Kartenlesevorrichtung in einer Vielzahl von Schließstellungen verrastbar ist.

9. Kartenlesevorrichtung nach Anspruch 8,
**dadurch gekennzeichnet,**
**daß** der Deckel (3) durch ein verschieden weites Niederdrücken in die verschiedenen Schließstellungen bringbar ist, wobei das Niederdrücken durch die im Kontakt- und Kartenträgerteil (2) der Kartenlesevorrichtung befindlichen Karten (1) begrenzt wird.

10. Kartenlesevorrichtung nach einem der Ansprüche 7 bis 9,
**dadurch gekennzeichnet,**
**daß** eine Rastverbindung zwischen dem Deckel (3) und dem Kontakt- und Kartenträgerteil (2) der Kartenlesevorrichtung durch ein horizontales Verschieben des Deckels lösbar ist.

11. Kartenlesevorrichtung nach einem der Anspruch 7 bis 10,
**dadurch gekennzeichnet,**
**daß** der Deckel (3) seitliche Schürzen (34) aufweist, welche zumindest die unterste der im Kontakt- und Kartenträgerteil (2) der Kartenlesevorrichtung befindlichen Karten (1) hintergreifen oder zwischen sich einklemmen und beim Öffnen des Deckels zusammen mit den anderen Karten des im Kontakt- und Kartenträgerteil befindlichen Kartenstapels mitnehmen.

## Claims

1. Card reading device, **characterised in that** the latter is designed for the reading of laterally offset superimposed cards (1), said card reading device having a collapsible cover (3) which when open allows the insertion of a card to be read in the card reading device, and when closed retains the cards to be read in the card reading device in their required position.

2. Card reading device according to claim 1, **characterised in that** the card reading device comprises a multitude of contact elements (22a, 22b, 22c) which are provided for the simultaneous contacting of superimposed cards (1) and which are concentrated in a contact element section of stair-like design.

3. Card reading device according to claim 2, **characterised in that** a related group of contact elements (22a, 22b, 22c) is provided per card and **in that** the contact element groups are arranged at different heights and laterally offset.

4. Card reading device according to claim 3, **characterised in that** the height difference between neighbouring contact element groups corresponds to the thickness of a card (1).

5. Card reading device according to claim 3 or 4, **characterised in that** the lateral offset of the neighbouring contact element group corresponds to the lateral offset in which the cards (1) which are to be read are to be arranged.

6. Card reading device according to one of claims 2 to 5, **characterised in that** the contact elements (22a, 22b, 22c) which are to be electrically connected to one another are combined into a multiple contact element (22).

7. Card reading device according to one of claims 2 to 6, **characterised in that** the collapsible cover (3) in its closed state pushes down the cards which are located in the card reading device by means of a resilient pressure element (35).

8. Card reading device according to claim 7, **characterised in that** the cover (3) can be latched with a contact and card carrier part (2) of the card reading device in a multitude of locking positions.

9. Card reading device according to claim 8, **characterised in that** the cover (3) can be put into the various locking positions by pressing down to different depths, whereby the pressing down is limited by the cards (1) located in the contact and card carrier part (2) of the card reading device.

10. Card reading device according to one of claims 7 to 9, **characterised in that** a latching connection between the cover (3) and the contact and card carrier part (2) of the card reading device can be detached by means of a horizontal shifting of the cover.

11. Card reading device according to one of claims 7 to 10, **characterised in that** the cover (3) comprises lateral skirts (34), which engage at least the cards (1) located at the bottom of the contact and card carrier part of the card reading device or clamp them between themselves and during the opening of the cover carry them along with the other cards of the card pile located in the contact and card carrier part.

## Revendications

1. Dispositif de lecture de carte, **caractérisé en ce qu'**il est conçu pour la lecture de cartes superposées, décalées latéralement (1), ce dispositif de lecture de cartes comportant un couvercle rabattable (3), permettant dans l'état ouvert une insertion de la carte à lire dans le dispositif de lecture de cartes et assurant dans l'état fermé la retenue des cartes se trouvant dans le dispositif de lecture de cartes dans leur position prédéterminée.

2. Dispositif de lecture de cartes selon la revendication 1, **caractérisé en ce que** le dispositif de lecture de cartes comporte plusieurs éléments de contact (22a, 22b, 22c) destinés à établir un contact simultané avec les cartes superposées (1), concentrés dans une section d'éléments de contact ayant une configuration en escalier.

3. Dispositif de lecture de cartes selon la revendication 2, **caractérisé en ce qu'**il comporte pour chaque carte un groupe cohérent d'éléments de contact (22a, 22b, 22c), les groupes d'éléments de contact étant agencés à des hauteurs différentes et étant décalés latéralement.

4. Dispositif de lecture de cartes selon la revendication 3, **caractérisé en ce que** la différence de hauteur entre des groupes d'éléments de contact avoisinants correspond à l'épaisseur d'une carte (1).

5. Dispositif de lecture de cartes selon les revendications 3 ou 4, **caractérisé en ce que** le décalage latéral du groupe d'éléments de contact avoisinant correspond au décalage latéral selon lequel les cartes à lire (1) doivent être agencées.

6. Dispositif de lecture de cartes selon l'une des revendications 2 à 5, **caractérisé en ce que** des éléments de contact devant être raccordés électriquement (22a, 22b, 22c) sont regroupés en un élément de contact multiple (22).

7. Dispositif de lecture de cartes selon l'une des revendications 2 à 6, **caractérisé en ce que** le couvercle rabattable (3) exerce dans l'état fermé une pression vers le bas sur les cartes se trouvant dans le dispositif de lecture de cartes par l'intermédiaire d'un élément de pression élastique.

8. Dispositif de lecture de cartes selon la revendication 7, **caractérisé en ce que** le couvercle (3) peut s'encliqueter dans une partie de contact et de support de carte (2) du dispositif de lecture de carte dans plusieurs positions de fermeture.

9. Dispositif de lecture de cartes selon la revendication 8, **caractérisé en ce que** le couvercle (3) peut être amené dans les différentes positions de fermeture par une pression vers le bas sur une distance différente, la pression vers le bas étant limitée par les cartes (1) se trouvant dans la partie de contact et de support de carte (2) du dispositif de lecture de cartes.

10. Dispositif de lecture de cartes selon l'une des revendications 7 à 9, **caractérisé en ce que** la liaison par encliquetage entre le couvercle (3) et la partie de contact et de support de carte (2) du dispositif de lecture de cartes peut être dégagée par un déplacement horizontal du couvercle.

11. Dispositif de lecture de cartes selon l'une des revendications 7 à 10, **caractérisé en ce que** le couvercle (3) comporte des bordures latérales (34), s'engageant derrière au moins la plus basse des cartes (1) se trouvant dans la partie de contact et de support de carte (2) du dispositif de lecture de cartes ou l'enserrant entre elles, avant de l'entraîner, ensemble avec les autres cartes de la pile de cartes se trouvant dans la partie de contact et de support de carte lors de l'ouverture du couvercle.
